Europäisches Patentamt

European Patent Office

Office européen des brevets

(19)

(11) Numéro de publication: **0 262 011 B1**

(12) **FASCICULE DE BREVET EUROPEEN**

(45) Date de publication de fascicule du brevet:
**15.05.91**

(21) Numéro de dépôt: **87401930.0**

(22) Date de dépôt: **25.08.87**

(51) Int. Cl.⁵: **F22B 37/20**, F28F 9/00,
**B23P 15/26**

(54) **Procédé de placement de tubes dans un générateur de vapeur.**

(30) Priorité: **27.08.86 FR 8612126**

(43) Date de publication de la demande:
**30.03.88 Bulletin 88/13**

(45) Mention de la délivrance du brevet:
**15.05.91 Bulletin 91/20**

(84) Etats contractants désignés:
**BE CH DE ES GB IT LI NL**

(56) Documents cités:
**EP-A- 0 011 959**
**EP-A- 0 186 957**
**FR-A- 2 558 933**

**PATENT ABSTRACTS OF JAPAN, vol. 10, no.
115 (M-474)[2172], 30 avril 1986; & JP-A-60
245 999 (HOTSUKAIDOU DENRIYOKU K.K.)
05-12-1985**

(73) Titulaire: **FRAMATOME**
**Tour Fiat 1, Place de la Coupole**
**F-92400 Courbevoie(FR)**

(72) Inventeur: **Boula, Gérard**
**Corpeau**
**F-21190 Meursault(FR)**
Inventeur: **Georges, Alain**
**Bragny S/Saone**
**F-71350 Verdun Sur Le Doubs(FR)**

(74) Mandataire: **Mongrédien, André et al**
**c/o BREVATOME 25, rue de Ponthieu**
**F-75008 Paris(FR)**

## Description

PROCEDE DE PLACEMENT DE TUBES DANS UN GENERATEUR DE VAPEUR

La présente invention a pour objet un procédé de placement de tubes dans un générateur de vapeur.

Certains générateurs de vapeur, notamment ceux utilisés dans les centrales nucléaires, comportent trois mille tubes ou plus en forme de U dont les branches sont longues d'une dizaine de mètres. On enfile ces tubes dans une série de plaques entretoises percées, et leurs extrémités sont dudgeonnées dans une plaque tubulaire au contact de la boîte à eau primaire.

Les perçages permttent une disposition en nappes planes et parallèles des tubes, à l'intérieur desquelles ils sont placés concentriquement suivant l'écartement de leurs branches et le rayon de la partie courbe du U.

Par ailleurs, la largeur des nappes diminue quand on s'éloigne de la nappe centrale, et comme les différentes nappes sont centrées sur le même plan, le contour général de la zone des parties courbes des U est celui d'une demi-sphère.

Les nappes étant très compactes, une analogie d'aspect a fait appeler cette zone "chignon".

Les problèmes qui se posent dans ce genre d'installations sont dus aux phénomènes vibratoires dont le générateur de vapeur est le siège : ce générateur est en effet de forme très allongée et sensible aux oscillations qui sont plus accentuées à son sommet où se trouve le chignon. L'impossibilité de disposer des plaques entretoises supplémentaires à cet endroit, jointe à la souplesse des tubes et à leurs longueurs libres différentes, engendre des comportements vibratoires complexes qu'il faut éliminer.

Pour cette raison, on insère des barres antivibratoires entre chaque nappe plane de tubes, dont on soude ensuite les extrémités débordant quelque peu du chignon à des "épingles" semi-circulaires disposées suivant des méridiens. On obtient ainsi un ensemble beaucoup plus rigide et d 'un comportement vibratoire bien meilleur.

Toutefois, la mise en place de barres antivibratoires entre des nappes serrées, de plusieurs mètres de largeur, constituées de tubes plus ou moins déformés et dont ceux qui sont situés à l'intérieur du chignon sont presque inaccessibles, laisse subsister des problèmes : l'insertion est délicate même avec l'introduction préliminaire d'un fil de nylon entre les deux nappes de tubes concernées ; et surtout, les tubes excessivement gauchis sont presque toujours victimes d'éraflures, de chocs qui constituent autant d'amorces possibles de corrosion et qui sont d'autant plus susceptibles de se produire que le montage nécessite de coucher le générateur, et que les nappes inférieures sont alors fortement comprimées par le poids des autres nappes. Après le montage, les tubes sont inaccessibles et leurs défauts ne peuvent plus être rattrapés : on peut simplement essayer de prouver, à l'aide de sondes à long manche, que les jeux entre les barres antivibratoires et certains tubes ne sont pas trop importants. Ces mesures, effectuées dans de mauvaises conditions, sont trop imprécises et ne sont plus considérées comme fiables, et on essaie de développer des procédés à l'aide de courants de Foucault, qui ne permettront au mieux que de constater l'absence de malfaçons mais non d'y remédier.

Cet état de fait entraîne pour conséquence une méfiance des organismes chargés d'examiner la sûreté des centra les nucléaires, ainsi que l'impossibilité de resserrer les nappes de tubes autant qu'on le voudrait.

Les documents EP-A-0 186 957 et FR-A-2 558 933 décrivent des conceptions où les barres antivibratoires peuvent être dilatées pour coincer les tubes, ce qui est une solution de ces problèmes qui diffère de l'invention.

La présente invention concerne donc un nouveau procédé de placement de tubes dans un générateur de vapeur, dans lequel on vérifie l'absence de gauchissement de ces tubes en les montant nappe par nappe, ce qui permet de les ôter et de les remplacer s'ils sont hors tolérances.

Plus précisément, ce procédé concerne le placement de tubes ayant une partie en forme de U par nappes planes, séparées par des barres intermédiaires, notamment antivibratoires, dans un générateur de vapeur, caractérisé en ce qu'il comprend la répétition des opérations suivantes, le générateur étant orienté, au moment du montage, de façon que les nappes de tubes soient horizontales :

- mise en place d'une nappe de tubes ;
- pose de barres intermédiaires au-dessus de cette nappe sur la partie en forme de U des tubes ;
- chargement par des forces disposées le long des barres intermédiaires et perpendiculaires au plan de la nappe, les forces simulant, en importance et en répartition, le poids total des nappes de tubes à disposer au-dessus des nappes déjà mises en place ;
- vérification du jeu entre les barres intermédiaires et chacun des tubes de la nappe ;
- enlèvement des tubes dont le jeu avec les barres intermédiaires est hors tolérances et remplacement par des tubes corrects.

Ce procédé sera mieux compris à la lumière de la description qui suit d'exemples de réalisation donnés à titre explicatif et non limitatif. Cette description se réfère à des dessins annexés sur lesquels :
- la figure 1 représente la coupe d'un générateur de vapeur connu utilisé dans l'industrie nucléaire ;
- la figure 2 représente l'opération de pose d'une nappe caractéristique du procédé de l'invention ;
- la figure 3 représente le générateur de vapeur après montage de la première moitié du chignon ;
- la figure 4 représente l'opération de soudage des épingles méridiennes du chignon ;
- la figure 5 représente le générateur de vapeur au début du montage de la seconde moitié du chignon.

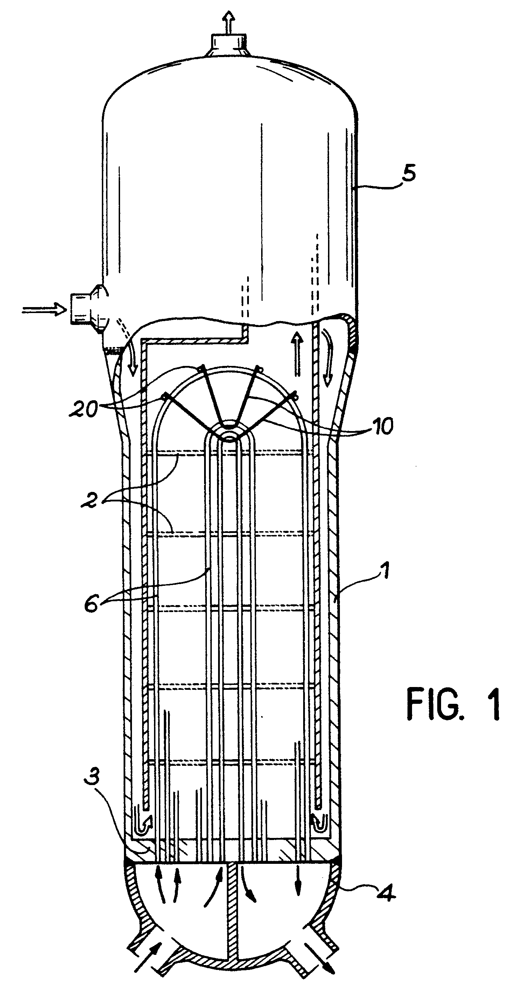

La figure 1 représente donc un générateur de vapeur analogue à ce lui pour lequel le procédé objet de l'invention a été conçu. Au moment du montage des tubes, on a simplement assemblé la virole inférieure 1, les plaques entretoises 2 et la plaque tubulaire inférieure 3 ; la boîte à eau 4, ainsi que la virole supérieure 5 et tout l'appareillage situé à l'intérieur de celle-ci seront montés ultérieurement.

Pour effectuer le montage des tubes 6, il faut tout d'abord coucher la virole inférieure 1 et l'orienter de telle façon que les nappes de tubes 6 puissent être montées horizontalement. On emploie pour ceci des échaufaudages munis de roulettes qui permettent sa rotation.

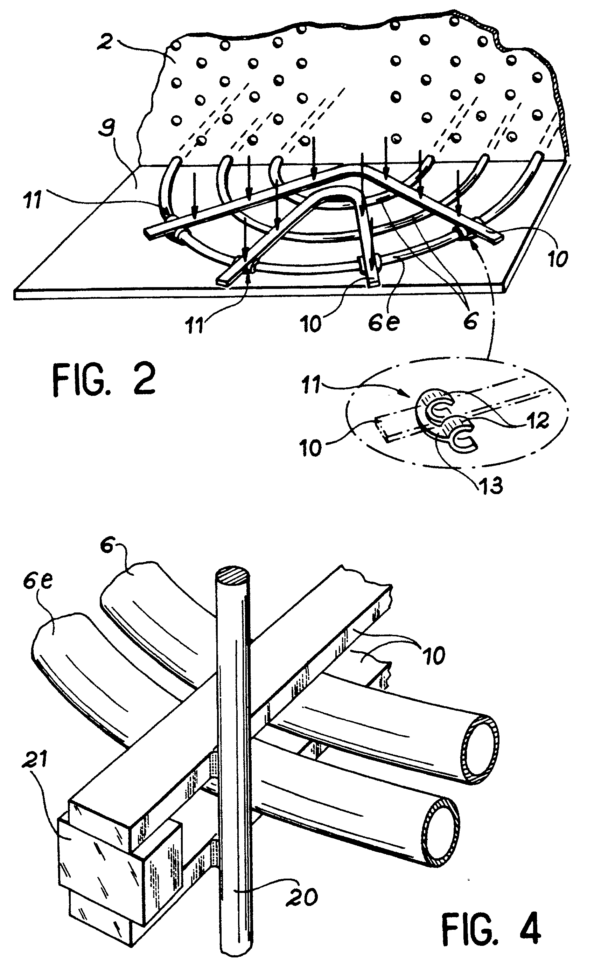

Comme illustré sur la figure 2, on commence par introduire une nappe de tube 6 située au centre du chignon. Les extrémités de chaque tube 6 ont été munies d'ogives coniques qui assurent le centrage des tubes 6 sur les trous des plaques entretoises 2. Les tubes sont livrés par le fabricant dans des caisses selon un ordre prédéterminé. Ces caisses ont une largeur d'environ 3 mètres. Il est donc très difficile sinon impossible pour les monteurs qui placent les tubes de saisir ceux qui sont disposés au plus près de l'axe de la caisse en se plaçant sur les côtés de celle-ci.

Les caisses sont prévues avec un plancher intermédiaire entre chaque nappe de tubes. Les monteurs appréhendent les tubes à chaque extrémité des branches du "U" et seulement deux hommes sont nécessaires au montage des tubes dans un générateur de vapeur. La mise en place des tubes se faisant par l'extrémité des caisses, il n'y a pas de ce fait de limite aux dimensions des appareils à tuber.

Les monteurs enfoncent petit à petit les tubes 6 jusqu'à ce que les ogives débouchent sur la face extérieure de la plaque tubulaire 3. Elles sont alors enlevées et un léger dudgeonnage est apporté aux extrémités des tubes 6 de façon à les fixer axialement, sans toutefois que cet assemblage soit indémontable.

On règle la hauteur d'une table 9 de façon à soutenir les tubes 6, dont le porte-à-faux est excessif compte tenu de leur souplesse. Quand la nappe tout entière a été mise en place, on installe les barres antivibratoires 10 au-dessus de cette nappe après avoir vérifié qu'elles appartiennent sensiblement à un plan. De manière optimale, on dispose en éventail plusieurs barres 10 plus ou moins coudées de façon à entraver le débattement de tous les tubes 6 de la nappe, et ceci suivant des méridiens à peu près régulièrement répartis. Ces barres sont maintenues en place à l'aide d'agrafes 11 de plastique constituées de deux pinces déformables 12 et d'un corps de liaison 13 et fixées sur le tube extérieur 6e de la nappe : les pinces 12 enserrent ce tube 6e, et l'intervalle des pinces 12 permet le maintien des barres antivibratoires 10 avec un faible jeu.

On applique alors des forces sur les barres 10, dont la répartition et l'importance simulent le poids des nappes qui seront situées au-dessus de la nappe qui vient d'être posée. Ces forces ont été symbolisées sur la figure 2 par des flèches verticales descendantes ; elles peuvent être engendrées par tout dispositif approprié, tels que des vérins, ou plus simplement par des masses inertes.

Les barres antivibratoires 10 pèsent donc avec une certaine répartition de forces sur les tubes 6 de la nappe ; elles sont en contact avec un certain nombre d'entre eux mais présentent un jeu vis-à-vis d'autres tubes 6 appartenant à cette nappe. C'est ce jeu qu'on évalue à l'aide d'un calibre quelconque car tous les tubes sont accessibles sans difficulté, ce qui n'était pas le cas avec le procédé antérieur.

Les tubes 6 dont le jeu est trop important sont considérés comme faisant l'objet de malfaçons. Ils sont donc enlevés et remplacés par des tubes de rechange, ce que n'empêche pas le dudgeonnage léger auquel on a procédé auparavant pour maintenir en place ces tubes.

Quand tous les tubes 6 de la nappe sont sains, on procède au montage de la nappe suivante, juste au-dessus des barres antivibratoires 10. On dispose au-dessus de cette deuxième nappe d'autres barres antivibratoires que l'on charge comme il a été expliqué plus haut ; bien entendu, les forces sont inférieures puisque les nappes dont il faut simuler le poids sont moins nombreuses. La vérification des jeux et la mise au rebut éventuelle de certains tubes de cette deuxième nappe se font suivant le même principe que précédemment, et on empile ainsi peu à peu les nappes de tubes.

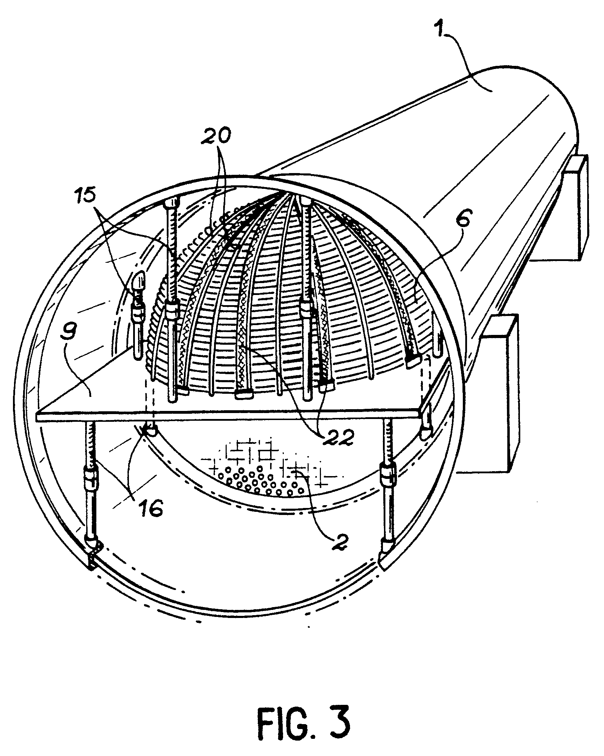

Quand la moitié du chignon a été constituée, la disposition d'ensemble du générateur de vapeur est indiquée figure 3. La table 9 qui avait permis, au début du montage, de soutenir la première nappe de tubes posée supporte maintenant le poids du demi-chignon. Elle doit donc être portée par des tirants 15 qui complètent l'action de supports 16 de la table 9 ; ces tirants 15 et supports 16 doivent être fixés à la virole inférieure 1 à leur autre extrémité comme on le verra plus loin.

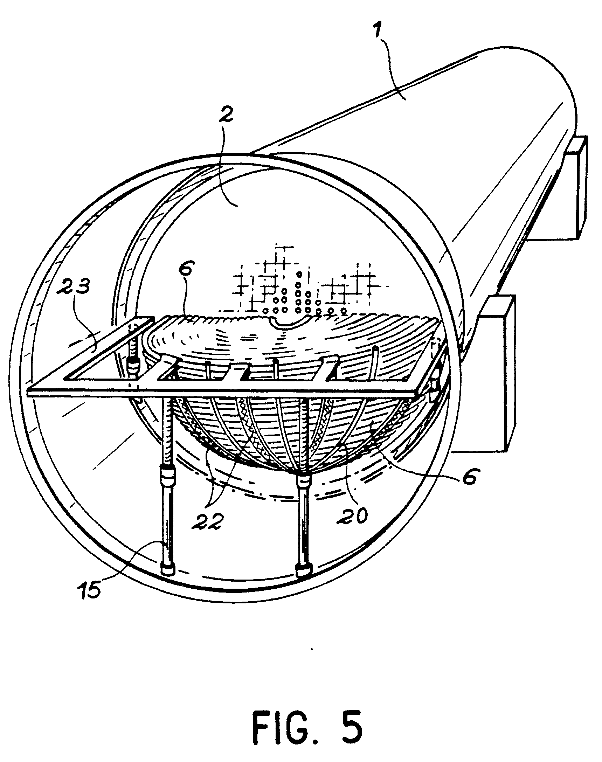

Selon un mode de réalisation préféré de l'invention, on procède maintenant au soudage des barres antivibratoires 10 entre elles par l'intermédiaire de pièces de liaison 20 appelées "épingles". La figure 4, qui montre leur disposition, représente plusieurs tubes 6 appartenant à une même nappe et dont le tube disposé à l'extérieur du chignon est désigné par 6e. Elle repésente encore l'extrémité d'une paire de barres antivibratoires 10 dont les agrafes 11 ont été enlevées.

On dispose alors une cale de réglage 21 entre ces barres antivibratoires 10 de manière à maîtriser les déformations engendrées par le soudage de l'épingle 20 sur les extrémités des barres antivibratoires 10 ; on constate que les épingles 20 appartiennent à des plans orthogonaux à ceux des barres antivibratoires 10 et aux nappes de tubes 6, ce qui leur confère une disposition en méridiens sur le chignon, comme on le voit clairement sur la figure 3.

Les épingles 20 sont soudées à une distance du tube extérieur 6e qui est définie en fonction du dudgeonnage des tubes 6 qui sera effectué par la suite ; il est, dans la pratique, nécessaire de protéger les tubes 6 par une couverture thermiquement isolante au moment du soudage et que l'on retire ensuite, et on complète l'action de rigidification des épingles 20 par des sangles 22 disposées entre celles-ci et qui s'opposent à la déformation du demi-chignon assemblé sous l'action de son propre poids. Les sangles 22 peuvent être remplacées par des outillages de maintien mécaniques pour s'opposer à la déformation du demi-chignon.

On assemble ensuite l'autre moitié du chignon.

A partir de l'état du montage représenté figure 3, on procède d'abord à une rotation de 180° de la virole inférieure 1. Le demi-chignon assemblé passe donc en position basse ; il est nécessaire de tenir compte de son balourd par un système de freinage approprié.

Après l'achèvement de la rotation, la table 9 est démontée et remplacée par un cadre 23 auquel sont attachées les sangles 22 et qui soutient le poids du demi-chignon à l'aide des tirants 15 qui ont été conservés. On arrive alors à la configuration représentée figure 5.

La seconde moitié du chignon est alors montée par nappes de tubes de la façon décrite plus haut : mise en place de barres antivibratoires 10, vérification des jeux, remplacement éventuel des tubes 6 hors tolérances et mise en place d'une nouvelle nappe de tubes. les barres antivibratoires 10 de cette seconde moitié sont enfin liées entre elles au moyen de nouvelles épingles 20. Les tubes 6 sont alors correctement positionnés et il est possible de les dudgeonner sur la plaque tubulaire 13, après quoi le montage du générateur de vapeur est continué selon l'art antérieur.

On constate donc que le procédé de montage des tubes par nappes, qui constitue l'invention, présente l'avantage de pouvoir maîtriser les malfaçons de ces tubes, y compris de ceux qui sont situés à l'intérieur du chignon et qui étaient inaccessibles avec les procédés de montage antérieurs. De plus, les risques de détériorations consécutives à une introduction maladroite des barres antivibratoires sont complètement éliminés.

Il est donc possible de garantir une fabrication correcte aux autorités responsables de la sécurité des centrales nucléaires ; un autre avantage est que les tubes peuvent être disposés avec une densité beaucoup plus importante, notamment en quinconce, ce qui n'était pas possible avec le procédé de montage antérieur.

**Revendications**

1. Procédé de placement de tubes (6) ayant une partie en forme de U par nappes planes séparées par des barres intermédiaires (10), notamment antivibratoires, dans un générateur de vapeur, caractérisé en ce qu'il comprend la répétition de la séquence d'opérations suivantes, le générateur étant orienté, au moment du montage, de façon que les nappes de tubes (6) soient horizontales :
   - mise en place d'une nappe de tubes (6) ;
   - pose de barres intermédiaires (10) au-dessus de cette nappe sur la partie en forme de U des tubes ;
   - chargement par des forces disposées le long des barres intermédiaires (10) et perpendiculaires au plan de la nappe, les forces simulant, en importance et en répartition, le poids total des nappes de tubes à disposer au-dessus des nappes déjà mises en place ;
   - vérification du jeu entre les barres intermédiaires (10) et chacun des tubes (6) de la nappe ;
   - enlèvement des tubes (6) dont le jeu avec les barres intermédiaires (10) est hors tolérances et remplacement par des tubes corrects.

2. Procédé de placement de tubes par nappes selon la revendication 1, caractérisé en ce qu'il comprend en outre une étape de fixation démontable des nappes de tubes (6), dès que ces nappes sont mises en place, au moyen d'un léger dudgeonnage des tubes (6).

3. Procédé de placement de tubes par nappes selon la revendication 1 ou 2, caractérisé en ce que la première nappe montée est la nappe centrale du réseau de tubes (6) et en ce qu'on monte d'abord toutes les nappes situées au-dessus de cette première nappe, après quoi on imprime une rotation d'un demi-tour au générateur de vapeur, de façon que les nappes assemblées passent au-dessous de la nappe centrale, et on achève le montage des tubes (6) par empilements successifs des nappes situées au-dessus de la nappe centrale.

4. Procédé de placement de tubes (6) par nappes selon la revendication 3, caractérisé en ce qu'il comprend, avant la rotation du générateur de vapeur, une étape consistant à lier rigidement les extrémités des barres intermédiaires (10) déjà mises en place au moyen d'épingles (20) de liaison.

## Claims

1. Process for the installation of tubes (6) having a U-shaped portion in the form of planar layers, separated by intermediate and in particular antivibratory bars (10), in a steam generator, characterized in that it comprises the repetition of the following operations, the generator being oriented, at the time of installation, in such a way that the layers of tubes (6) are horizontal:
   - installing a layer of tubes (6);
   - positioning intermediate bars (10) above said layer on the U-shaped part of the tubes;
   - loading by forces along the intermediate bars (10) and perpendicular to the plane of the layer, the forces simulating, as regards magnitude and distribution, the total weight of the layers of tubes to be positioned above the layers already in place;
   - checking the clearance between the intermediate bars (10) and each of the tubes (6) of the layer;
   - removal of the tubes, whose clearance with the intermediate bar (10) is outside the tolerances and the replacement by correct tubes.

2. Process for the installation of tubes in the form of layers according to claim 1, characterized in that it also comprises a stage of dismantlably fixing layers of tubes (6), as soon as said layers are put into place, by means of a slight expansion of the tubes (6).

3. Process for the installation of tubes in layers according to claims 1 or 2, characterized in that the first layer installed is the central layer of the network of tubes (6) and in that this is followed by the installation of all the layers located above the said first layer and after which the steam generator is rotated by half a turn, in such a way that the assembled layers pass below the central layer and the installation of the tubes (6) is completed by successive stacks of layers located above the central layer.

4. Process for the installation of tubes (6) in layers according to claim 3, characterized in that it comprises, prior to the rotation of the steam generator, a stage consisting of rigidly linking the ends of the already installed intermediate bars (10) by means of connecting hairpins (20).

## Ansprüche

1. Verfahren zum Anordnen von Rohren (6) in ebenen Schichten, die voneinander durch dazwischen angeordnete Stangen (10), insbesondere vibrationshemmende Stangen, getrennt sind, in einem Dampferzeuger,
   **gekennzeichnet** durch
   die ständige Wiederholung folgender Betriebschrittsequenz, wobei der Dampferzeuger während der Montage so angeordnet ist, daß die Rohrschichten (6) horizontal orientiert sind,
   - Anordnung einer Schicht von Rohren (6),
   - Auflegen der Zwischenstangen (10) auf diese Schicht, im Bereich der U-förmigen Krümmungen der Rohre,
   - Einführen durch Anlegen von Kräften entlang der Zwischenstäbe (10) und senkrecht zur Schichtebene, wobei die Kräfte hinsichtlich ihres Betrages und ihrer Verteilung das Gesamtgewicht simulieren, das die Schichten haben, die auf die schon plazierten Schichten anzuordnen sind,
   - Überprüfung des Spiels zwischen den Zwischenstäben (10) und jedem der Rohre (6) einer Schicht,
   - Entfernung der Rohre (6), deren Spiel mit den Zwischenstangen (10) außerhalb der Toleranzen liegt und Ersetzung durch ordnungsgemäße Rohre.

2. Verfahren nach Anspruch 1, dadurch gekennzeichnet, daß ferner ein Verfahrensschritt zur lösbaren Befestigung der Rohrschichten (6) durch ein leichtes Einwalzen der Rohre (6) erfolgt, sobald diese Schichten plaziert sind.

3. Verfahren nach einem der Ansprüche 1 oder 2, dadurch gekennzeichnet, daß die erste Schicht die mittlere Schicht der Rohrverteilung (6) ist und daß zuerst die oberhalb dieser ersten Schicht gelegenen Schichten montiert werden, wonach der Dampferzeuger um eine Halbdrehung gedreht wird derart, daß die montierten Schichten unterhalb die mittlere Schicht gelangen dadurch, daß die Montage der Rohre (6) fortgeführt wird, indem die oberhalb der mittleren Ebene gelegenen Ebenen aufgefüllt werden.

4. Verfahren nach Anspruch 3, dadurch gekennzeichnet, daß vor der Drehung des Dampferzeugers ein Verfahrensschritt erfolgt, der darin besteht, daß die Enden der Zwischenstangen (10), die schon plaziert sind, mittels Verbindungsklammern (20) fest miteinander verbunden werden.

FIG. 1

FIG. 2

FIG. 4

# FIG. 3

FIG. 5